# EUROPEAN PATENT APPLICATION

(11) **EP 4 564 341 A1**
(43) Date of publication of application: **04.06.2025**
(21) Application number: 23894790.7
(22) Date of filing: 27.09.2023
(51) Int. Cl.: G09G 3/32, G09G 3/14

(54) **DISPLAY DEVICE AND DRIVING METHOD THEREOF**

(30) Priority: 21.11.2022 KR 20220156679
(71) Applicant: Samsung Electronics Co., Ltd., Suwon-si, Gyeonggi-do 16677 (KR)
(72) Inventor: CHEONG, Seongkoo, Suwon-si Gyeonggi-do 16677 (KR)
(74) Representative: Appleyard Lees IP LLP
(86) International application number: PCT/KR2023/015138
(87) International publication number: WO 2024/111860

(57) **Abstract**

A display device is provided. The display device includes a display including a plurality of display modules, a driving unit including a plurality of driving modules connected to the plurality of display modules, memory storing first peak brightness information corresponding to a first power supply situation, second peak brightness information corresponding to a second power supply situation relatively limited in comparison to the first power supply situation, and current information corresponding to each of the plurality of display modules, and one or more processors connected to the display, the driving unit and the memory to control the display device. The one or more processors are configured to identify a first peak brightness value corresponding to a first display module among the plurality of display modules based on the first peak brightness information, identify a second peak brightness value corresponding to the first display module based on the second peak brightness information, and control the plurality of driving modules such that the first display module has a relatively higher peak brightness value among the first peak brightness value and the second peak brightness value based on current information of the plurality of display modules.

## Description

### [Technical Field]

The present disclosure relates to a display device and a driving method thereof, and more particularly to, a display device including a light emitting diode and a driving method thereof.

### [Background Art]

A light emitting diode (LED) is a semiconductor light-emitting device that converts electric current into light. Recently, as the brightness of light-emitting diodes has gradually increased, their use as light sources for displays, automobiles, and lighting has increased. By using fluorescent materials or combining light-emitting diodes of various colors, light-emitting diodes that emit white light with excellent efficiency can also be implemented. These light-emitting diodes can display images with high brightness as the current increases.

### [Disclosure]

### [Technical Solution]

A display device according to an embodiment includes a display including a plurality of display modules, a driving unit including a plurality of driving modules connected to the plurality of display modules, memory storing first peak brightness information corresponding to a first power supply situation, second peak brightness information corresponding to a second power supply situation relatively limited in comparison to the first power supply situation, and current information corresponding to each of the plurality of display modules, and one or more processors connected to the display, the driving unit and the memory to control the display device. The one or more processors are configured to identify a first peak brightness value corresponding to a first display module among the plurality of display modules based on the first peak brightness information, identify a second peak brightness value corresponding to the first display module based on the second peak brightness information, and control the plurality of driving modules such that the first display module has a relatively higher peak brightness value among the first peak brightness value and the second peak brightness value based on current information of the plurality of display modules stored in the memory.

The first peak brightness information according to an embodiment may be is information in which measures a peak brightness value according to power load while increasing a size providing the white image, with the predetermined peak brightness value when a white image is provided to a specific size area of the display and a black image is provided to remaining areas.

The second peak brightness information according to an embodiment may be information in which a white image is provided to an area that is smaller than the specific size area and a black image is provided to remaining areas to calculate the predetermined peak brightness value and a peak brightness value according to power load is calculated while increasing a size providing the white image.

The first peak brightness information according to an embodiment may be a graph in which a peak brightness value decreases as a slope gradually decreases as the power load increases and the predetermined peak brightness is maintained during a first power load section.

The second peak brightness information according to an embodiment may be a graph in which a peak brightness value decreases as the predetermined peak brightness is provided during a second power load section that is shorter than the first power load section and a slope is maintained as the power load increases.

The one or more processors according to an embodiment may identify the first peak brightness value based on power consumption of the first display module having maximum power consumption among individual power consumption of each of the plurality of display modules and the first peak brightness information, and identify the second peak brightness value based on the power consumption of the first display module and the second peak brightness information.

The memory according to an embodiment may further store power information of each sub-pixel for each grayscale of an image. The one or more processors may identify individual power consumption of each of the plurality of display modules based on a grayscale value of an image displayed on an area of the plurality of display modules and the power information of each sub-pixel for each grayscale, and identify the first display module having the maximum power consumption based on the individual power consumption of each of the plurality of display modules.

The one or more processors according to an embodiment may provide a UI for receiving an input of a power reduction ratio through the display, and identify the second peak brightness value corresponding to the first display module based on second peak brightness information corresponding to the power reduction ratio input through the UI.

The first peak brightness information according to an embodiment may be a graph in which a peak brightness value decreases as a slope gradually decreases as the power load increases and the predetermined peak brightness is maintained during a first power load section.

The second peak brightness information according to an embodiment may be a graph in which a peak brightness value decreases as a slope is maintained as the power load increases and the predetermined peak brightness is maintained during a second power load section that is smaller than the first power load section.

The second peak brightness information according to an embodiment may be a graph in which when a power reduction ratio input through the UI is a first ratio, the predetermined peak brightness is maintained during the second power load section, and a graph in which when a power reduction ratio input through the UI is a second ratio that is greater than the first ratio, the predetermined peak brightness is maintained during a third power load section that is smaller than the second power load section .

The one or more processors according to an embodiment may obtain third peak brightness information by identifying a relatively higher peak brightness value among the first peak brightness information and the second peak brightness information according to power load, and control the plurality of driving modules such that the first display module has a relatively higher peak brightness value among the first peak brightness value and the second peak brightness value according to the third peak brightness information.

The current information according to an embodiment may include current control information according to brightness of each sub-pixel corresponding to each of the plurality of display modules, and the sub-pixel may include red (R) LED, green (G) LED and blue (B) LED sub-pixels.

A driving method of a display device including a plurality of display modules according to an embodiment includes identifying a first peak brightness value corresponding to a first display module among the plurality of display modules based on first peak brightness information corresponding to a first power supply situation, identifying a second peak brightness value corresponding to the first display module based on second peak brightness information corresponding to a second power supply situation that is relatively limited in comparison to the first power supply situation, and controlling a plurality of driving modules connected to the plurality of display modules such that the first display module has a relatively higher peak brightness value among the first peak brightness value and the second peak brightness value based on current information of the plurality of display modules.

According to an embodiment, in a non-transitory computer-readable recording medium storing a computer instruction, the computer instruction, when executed by a processor of a display device including a plurality of display modules, causes the display device to identify a first peak brightness value corresponding to a first display module among the plurality of display modules based on first peak brightness information corresponding to a first power supply situation, identify a second peak brightness value corresponding to the first display module based on second peak brightness information corresponding to a second power supply situation that is relatively limited in comparison to the first power supply situation, and control a plurality of driving modules connected to the plurality of display modules such that the first display module has a relatively higher peak brightness value among the first peak brightness value and the second peak brightness value based on current information of the plurality of display modules.

### [Description of Drawings]

FIGS. 1A and 1B are views provided to schematically explain an operation of a display device according to an embodiment;
FIG. 2A is a block diagram illustrating configuration of a display device according to an embodiment;
FIG. 2B is a block diagram illustrating configuration of a display device in detail according to an embodiment;
FIG. 3A is a view provided to explain current gain information for each brightness of each sub-pixel according to an embodiment;
FIG. 3B is a view provided to explain power information of each sub-pixel for each grayscale of an image according to an embodiment;
FIG. 4 is a view provided to explain a driving method of a display device according to an embodiment;
FIGS. 5A, 5B, 6A, and 6B are views provided to explain a method of acquiring first peak brightness information and second peak brightness information according to an embodiment;
FIG. 7 is a view illustrating third peak brightness information according to an embodiment;
FIG. 8 is a view provided to explain a display driving method according to an embodiment;
FIGS. 9, 10A, 10B, 11A, and 11B are views provided to explain a display driving method according to an embodiment;
FIG. 12 is a view provided to explain brightness characteristics of R/G/B LED elements according to an increase in current according to an embodiment; and
FIGS. 13A to 13C are views provided to explain color shift characteristics of an R/G/B element with increasing current according to an embodiment.

### [Detailed Description of Embodiments]

The terms used in this specification will be described briefly and the present disclosure will be described in detail.

General terms that are currently widely used are selected as the terms used in the embodiments of the disclosure in consideration of their functions in the disclosure, but may be changed based on the intention of those skilled in the art or a judicial precedent, the emergence of a new technique, or the like. In addition, in a specific case, terms arbitrarily chosen by an applicant may exist, in which case, the meanings of such terms will be described in detail in the corresponding descriptions of the disclosure. Therefore, the terms used in the embodiments of the disclosure need to be defined on the basis of the meanings of the terms and the overall contents throughout the disclosure rather than simple names of the terms.

Terms "first", "second" or the like may be used to described various components, but those components should not be limited by the above terms. The terms will be used only to distinguish one component from the other components.

Singular expressions include plural expressions unless the context clearly dictates otherwise. In this specification, terms such as "comprise" or "have" are intended to designate the presence of features, numbers, steps, operations, components, parts, or a combination thereof described in the specification, but are not intended to exclude in advance the possibility of the presence or addition of one or more of other features, numbers, steps, operations, components, parts, or a combination thereof.

An expression, "at least one of A or/and B" should be understood as indicating any one of "A", "B" and "both of A and B."

In exemplary embodiments, a "module" or a "unit" may perform at least one function or operation, and be implemented as hardware or software or be implemented as a combination of hardware and software. In addition, a plurality of "modules" or a plurality of "units" may be integrated into at least one module and be implemented as at least one processor (not shown) except for a 'module' or a "unit" that needs to be implemented as specific hardware.

Hereinafter, embodiments of the present disclosure will be described in detail with reference to the accompanying drawings so that those with ordinary skill in the art to which the present disclosure belongs can easily practice the present disclosure. However, the present disclosure may be implemented in various different forms and is not limited to the embodiments described herein. In addition, in order to clearly describe the present disclosure in the drawings, parts that are not related to the description are omitted, and similar parts are given similar drawing reference numerals throughout the specification.

Hereinafter, an embodiment of the present disclosure will be described in greater detail with reference to the accompanying drawings.

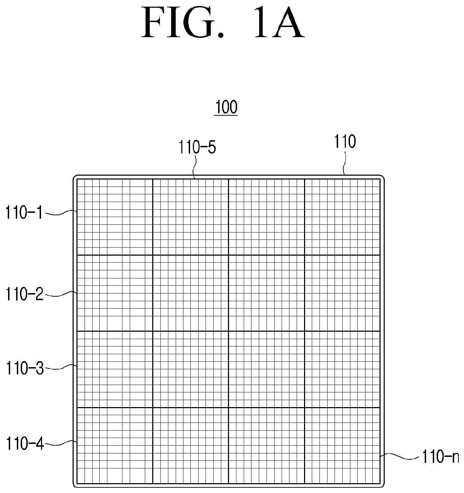

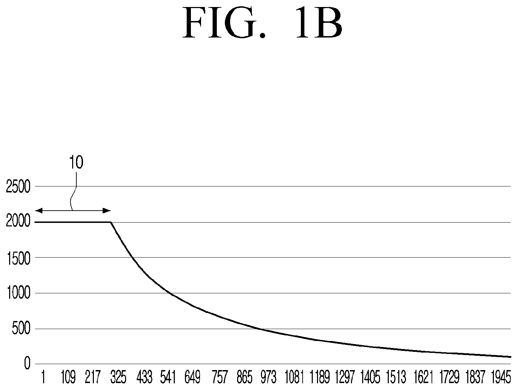

FIGS. 1A and 1B are views provided to schematically explain an operation of a display device according to an embodiment.

A display device 100 according to an embodiment may be implemented in a form in which a plurality of display modules 110-1, 110-2, 110-3, 110-4.... are physically connected as illustrated in FIG. 1A. Here, each of the plurality of display modules may include a plurality of pixels, for example, self-luminous pixels arranged in the form of matrix.. In particular, a display module may be implemented as an LED module in which each of a plurality of pixels is implemented as an LED (Light Emitting Diodes) pixel, or an LED cabinet in which a plurality of LED modules are connected, but is not limited thereto. For example, the display device 100 may be implemented as a micro LED, a mini LED, an Organic Light Emitting Diodes (OLED) display, a Plasma Display Panel (PDP), a Quantum dot (QD) display, a Quantum dot light-emitting diodes (QLED), etc. However, for convenience of explanation, the following description assumes that each display module is implemented as an LED cabinet.

LEDs can display images at high brightness by increasing the applied current, and generally, when using a display composed of LED cabinets, the peak brightness of each LED cabinet is determined based on the rated power capacity that can be provided by each LED cabinet. For example, a peak gain value determined with reference to the current gain modeling of the LED cabinet consuming the maximum power can be applied to the entire set. Here, the current gain modeling drives at maximum peak brightness that does not exceed the rated capacity of the power supply (e.g., SMPS) when the LED cabinet unit is full white. Accordingly, when the LED cabinet is full black, the power load of the SMPS can be measured by adjusting the size of the white patch image. For example, the graph illustrated in FIG. 1B may be a graph corresponding to a cabinet model in which predetermined peak brightness is maintained up to the power load at which the white patch image of up to about n% of the cabinet size is output when dynamic peaking is applied. As shown in FIG. 1B, the peak brightness gradually decreases as the power load increases due to the increase in the size of the white patch image.

Meanwhile, even the same product may have different peak brightness depending on the power situation of the site where the display device 100 is installed. For example, when the display device 100 is installed at a site with a limited power situation compared to a site with a normal power situation, the dynamic peak gain is uniformly reduced, resulting in a decrease in peak brightness.

Hereinafter, various embodiments of modeling a peak gain for maintaining peak brightness at a site with limited power will be described.

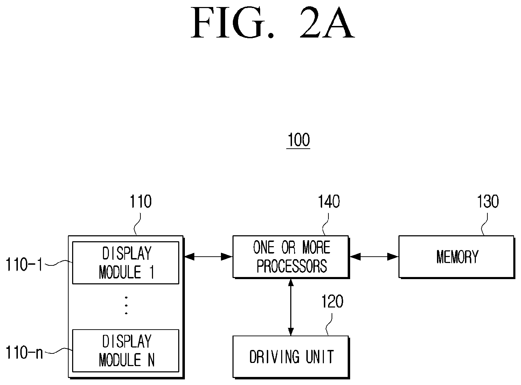

FIG. 2A is a block diagram illustrating configuration of a display device according to an embodiment.

Referring to FIG. 2A, the display device 100 includes a display 110, a driving unit 120, memory 130, and one or more processors 140.

The display 110 includes a plurality of display modules. In particular, the display 110 may be configured in a form in which a plurality of display modules 110-1,...110-n are connected and assembled. Here, each of the plurality of display modules may include a plurality of pixels, e.g., self-luminous pixels, arranged in the form of matrix. According to an embodiment, the display 110 may be implemented as a plurality of LED modules (LED modules including at least one LED element) and/or a plurality of LED cabinets. In addition, the LED module may include a plurality of LED pixels, and according to one example, the LED pixels may be implemented with RGB LEDs, and the RGB LEDs may include a RED LED, a GREEN LED, and a BLUE LED together. According to an example, the display device 100 may be implemented as an LED signage device.

The driving unit 120 drives the display 110 under the control of the one or more processors 140. For example, the driving unit 120 drives each LED pixel by applying a driving voltage or flowing a driving current to drive each self-luminous element, for example, an LED pixel, constituting the display panel 110 under the control of the processor 140.

The driving unit 120 may include a plurality of driving modules connected to each of the plurality of display modules 110-1,...110-n. For example, one display module 110-1 (e.g., a cabinet or a module) may be divided into a plurality of display areas and a driving module may be connected to each of the plurality of display areas. The plurality of driving modules may supply driving current to each of the plurality of display areas to correspond to each control signal input from the processor 140. Specifically, the plurality of driving modules may adjust at least one of a supply time or intensity of the driving current supplied to the plurality of display areas to correspond to each control signal input from the processor 140.

According to an embodiment, a power supply for supplying power may be provided to each of the plurality of display modules 110-1, ... 110-n. The power supply is a hardware that converts AC current into DC current so that it can be stably used in each of the plurality of display modules 110-1, ... 110-n and supplies power according to each system. The power supply may largely consist of an input electromagnetic interference (EMI) filter unit, an AC-DC rectifier unit, a DC-DC switching converter unit, an output filter, and an output unit. The power supply may be implemented as, for example, a switched mode power supply (SMPS). The SMPS is a DC-stabilized power supply device that stabilizes the output by controlling the on-off time ratio of a semiconductor switch element, and can be highly efficient, compact, and lightweight, so that it can be used to drive each of the plurality of display modules 110-1, ... 110-n. However, according to another example, the driving unit 120 may be implemented in the form of a single driving module that separately drives multiple SMPSs that supply power to each of the plurality of display modules 110-1,...110-n.

The memory 130 may store data required for various embodiments of the present disclosure. The memory 130 may be implemented as a memory embedded in the display device 100 or as a memory detachable from the display device 100 depending on the data storage purpose. For example, in the case of data for driving the display device 100, the data may be stored in the memory embedded in the display device 100, and in the case of data for the expansion function of the display device 100, the data may be stored in the memory detachable from the display device 100. Meanwhile, the memory embedded in the display device 100 may be implemented as at least one of a volatile memory (e.g. a dynamic RAM (DRAM), a static RAM (SRAM), or a synchronous dynamic RAM (SDRAM)), or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g. a NAND flash or a NOR flash), a hard drive, or a solid state drive (SSD)). The memory detachable from the display device 100 may be implemented in the form of a memory card (e.g., a compact flash (CF), a secure digital (SD), a micro secure digital (Micro-SD), a mini secure digital (Mini-SD), an extreme digital (xD), or a multi-media card (MMC)), an external memory connectable to a USB port (e.g., a USB memory), or the like.

According to an embodiment, the memory 130 may store current information of the plurality of display modules 110-1,.., 110-n. Here, the current information may be current control information according to brightness of each sub-pixel constituting a display module. Here, the current control information according to the brightness of each sub-pixel may be current control information according to the brightness of each sub-pixel that is calibrated (modeled) based on the brightness characteristics and color shift characteristics according to the current of each sub-pixel.

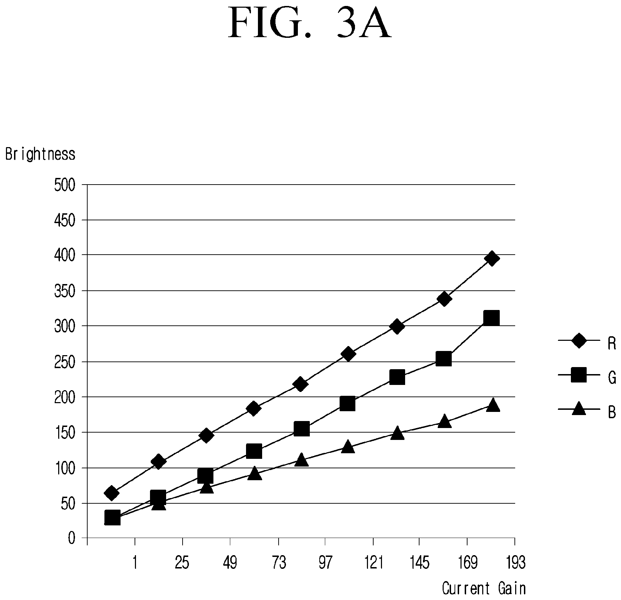

Specifically, the current control information according to the brightness of each sub-pixel may be the current gain information for each brightness of each sub-pixel calibrated based on the brightness level information according to the current of each sub-pixel and the color shift information according to the current of each sub-pixel. For example, the brightness level information according to the current of each sub-pixel may be the brightness shift information according to the change in current of the R/B/G LED element, and the color information according to the current of each sub-pixel may be the degree of change in the color coordinates (e.g., x, y color coordinates) according to the change in current of the R/B/G LED element. In this case, the current gain information according to the brightness of each sub-pixel may be the current gain value for each brightness of each sub-pixel obtained by calibrating the current value so that the amount of brightness change of each R/B/G LED element according to the current change is similar, while calibrating the current value so that the color shift phenomenon of each R/B/G LED element according to the current change does not occur. For example, as shown in FIG. 3A, the current gain information for each brightness of each sub-pixel may include a current gain value for each brightness of each sub-pixel calibrated based on the brightness and color characteristics of each sub-pixel as the current increases. However, the present disclosure is not limited thereto, and the current control information may be a current value itself, rather than a current gain value.

Further, the memory 130 may store brightness level information by power supplied to the display module. In other words, as the power supplied to the display module increases, the brightness of the display module also increases, but when the supplied power exceeds a predetermined threshold, the brightness increase rate of the display module gradually decreases and does not increase more than the maximum brightness value. Accordingly, information about the amount of brightness change of the display module in response to a change in the supply power may be measured and stored in the memory 130. In this case, the brightness level information by power may be the brightness increase amount information according to the power increase amount. However, even if the information is not in this form, any information indicating the relationship between the supply power and the brightness is applicable without limitation.

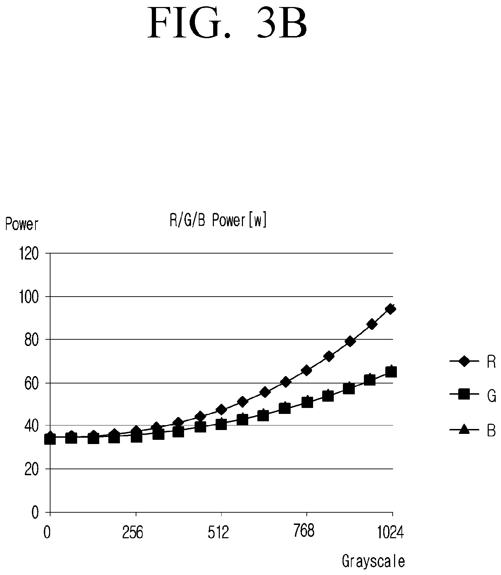

The memory 130 may also store power information of each sub-pixel for each grayscale. Since the grayscale of an image is associated with a brightness value, the power of each R/G/B LED element required to represent an image of a predetermined grayscale varies. As such, the power information of each R/G/B LED element for each grayscale of the image may be stored in the memory 130. For example, the power information of each R/G/B LED element for each grayscale of 255 (when the image has 256 levels of grayscale for each color signal in RGB) or 1024 (when the image has 1024 levels of grayscale for each color signal in RGB) may be stored in the memory 130. The power information for each grayscale may be measured and stored in the memory 130. In other words, the power information for each grayscale may be obtained by measuring the amount of power consumed by the R/G/B LED elements while displaying an image for each grayscale on the display module. For example, as shown in FIG. 3B, when each of the R/G/B LED elements represents each grayscale value of 1024 grayscale, the amount of power consumed may be different. In general, the power required to express the same grayscale value is relatively large for the red LED element compared to the green LED element and the blue LED element, while the green LED element and the blue LED element require approximately the same power to express the same grayscale value.

In addition, the memory 130 may store information about a binning group, information about maximum brightness per pixel, information about a color per pixel, a brightness correction coefficient per pixel, and the like. Here, the binning group may be, in the case of LED pixels, a group of LED pixels having the same characteristics (brightness, color coordinates, etc.) as much as possible.

For example, in order to achieve uniformity characteristics between a plurality of LED pixels, the brightness is adjusted downward through calibration using a brightness correction coefficient to match the maximum brightness to the target brightness. In this case, the brightness correction coefficient may be in the form of a 3*3 matrix for implementing the target R/G/B brightness, and by applying different brightness correction coefficients to each pixel, the maximum brightness becomes the target brightness to achieve uniformity. In addition, the color temperature may also be calibrated to have uniformity while implementing the target brightness based on the parameters in the form of a 3*3 matrix corresponding to each R/G/B element.

The memory 130 may further store information about the number, the size and the spacing of pixels constituting each of the plurality of display modules.

Meanwhile, according to another embodiment, the above-described information stored in the memory 130 may be obtained from an external device rather than stored in the memory 130. For example, some of the information may be received in real time from an external device, such as a set-top box, an external server, a user terminal, or the like.

The one or more processors 140 control the overall operations of the display device 100. Specifically, the one or more processors 140 may be connected to each component of the display device 100 and control the overall operations of the display device 100. For example, the one or more processors 140 may be electrically connected to the display 110, the driving unit 120 and the memory 130 to control the overall operations of the display device 100. The processor 140 may consist of one or multiple processors.

The one or more processors 140 may perform the operations of the display device 100 according to various embodiments by executing at least one instruction stored in the memory 130.

The one or more processors 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 140 may control one or any combination of the other components of the electronic device, and may perform communication-related operations or data processing. The one or more processors 140 may execute one or more programs or instructions stored in the memory. For example, the one or more processors may perform a method according to an embodiment by executing one or more instructions stored in the memory.

When a method according to an embodiment includes a plurality of operations, the plurality of operations may be performed by one processor or by a plurality of processors. For example, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors 140 may be implemented as a single core processor including a single core, or as one or more multicore processors including a plurality of cores (e.g., homogeneous multicore or heterogeneous multicore). When the one or more processors 140 are implemented as a multicore processor, each of the plurality of cores included in the multicore processor may include internal memory of the processor, such as cache memory and an on-chip memory, and a common cache shared by the plurality of cores may be included in the multicore processor. Each of the plurality of cores (or some of the plurality of cores) included in the multi-core processor may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor, or may be performed by a plurality of cores. For example, when a first operation, a second operation, and a third operation are performed by a method according to an embodiment, all of the first operation, the second operation, and the third operation may be performed by the first core included in the multi-core processor, or the first operation and the second operation may be performed by the first core included in the multi-core processor and the third operation may be performed by the second core included in the multi-core processor.

In the embodiments of the present disclosure, the processor may mean a system-on-chip (SoC) in which at least one processor and other electronic components are integrated, a single-core processor, a multi-core processor, or a core included in a single-core processor or multi-core processor, and here, the core may be implemented as CPU, GPU, APU, MIC, DSP, NPU, hardware accelerator, or machine learning accelerator, etc., but the core is not limited to the embodiments of the present disclosure. Hereinafter, for convenience of explanation, the one or more processors 140 are referred to as the processor 140.

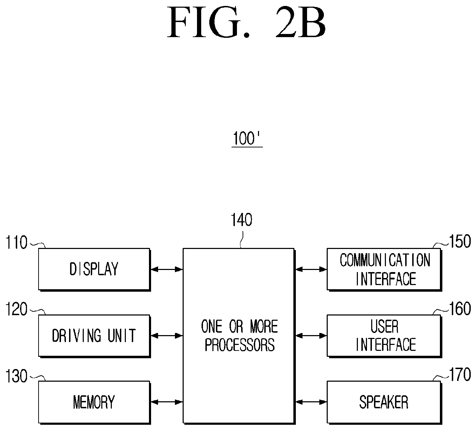

FIG. 2B is a block diagram illustrating configuration of a display device in detail according to an embodiment.

Referring to FIG. 2B, a display device 100' may include the display 110, the driving unit 120, the memory 130, the one or more processors 140, a communication interface 150, a user interface 160, and a speaker 160. Any of the configurations shown in FIG. 2B that overlap with the configuration shown in FIG. 2A will not be described in detail.

The communication interface 150 may be implemented as various interfaces according to the implementation examples of the display device 100'. For example, the communication interface 120 may receive an input image via streaming or downloading method from an external device, an external storage medium (e.g. USB memory), an external server (e.g., web-hard), etc. through a communication method such as Bluetooth, access point (AP)-based wireless fidelity (Wi-Fi, wireless local area network (LAN)), Zigbee, wired/wireless local area network (LAN), wide area network (WAN), Ethernet, IEEE 1394, high definition multimedia interface (HDMI), Universal Serial Bus (USB), mobile high-definition link (MHL), audio engineering society/European broadcasting union (AES/EBU) communication, optical communication, coaxial communication, etc. Here, the input image may be a digital image of any one of Standard Definition (SD), High Definition (HD), Full HD or Ultra HD images, but is not limited thereto.

The user interface 160 may be implemented as a button, a touch pad, a mouse, a keyboard, etc., or may be implemented as a touch screen that can also perform a display function and a manipulation input function.

The speaker 170 is configured to output not only various audio data but also various notification sounds, voice messages, etc. The processor 140 may control the speaker 170 to output feedback or various notifications according to various embodiments in the form of audio.

In addition, the display device 100' may include a camera (not shown), a microphone (not shown), a tuner (not shown), and a demodulator (not shown) according to implementation examples.

The camera (not shown) may be turned on in response to a predetermined event to take a picture. The camera (not shown) may be used to recognize gesture commands from a user or to obtain surrounding context information.

The microphone (not shown) is configured to receive a user voice or other sound and convert it into audio data. However, according to another embodiment, the display device 100' may receive a user voice input through an external device via the communication interface 150.

The tuner (not shown) may receive a radio frequency (RF) broadcast signal by tuning to a channel selected by the user or all previously stored channels among RF (Radio Frequency) broadcast signals received through an antenna.

The demodulator (not shown) may receive and demodulate a digital IF signal (DIF) converted from the tuner, and may also perform channel decoding, etc.

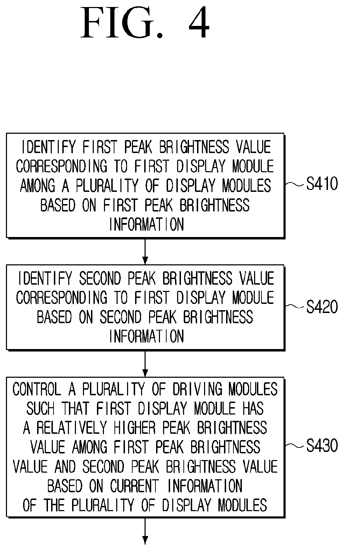

FIG. 4 is a view provided to explain a driving method of a display device according to an embodiment.

According to the embodiment illustrated in FIG. 4, the processor 140 may identify a first peak brightness value corresponding to a first display module among a plurality of display modules based on first peak brightness information (S410). Here, the first peak brightness information may be peak brightness information corresponding to a first power supply situation. For example, the first power supply situation may be a situation in which there is no limitation on the power supply to the display device 100 and the maximum power required by the display device 100 is sufficiently supplied.

Subsequently, the processor 140 may identify a second peak brightness value corresponding to the first display module based on second peak brightness information. Here, the second peak brightness information may be peak brightness information corresponding to a second power supply situation that is relatively more limited than the first power situation. For example, the second power supply situation may be a situation in which the maximum power required by the display device 100 is not provided sufficiently.

Then, the processor 140 may control the plurality of driving modules such that the first display module has a peak brightness value that is relatively higher of the first peak brightness value identified in step S410 and the second peak brightness value identified in step S420 based on the current information of the plurality of display modules stored in the memory 130 (S430).

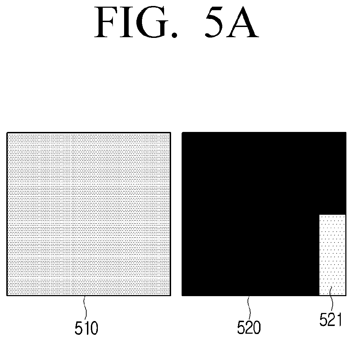

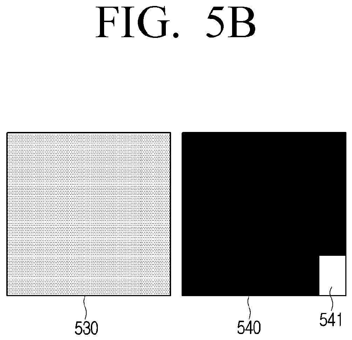

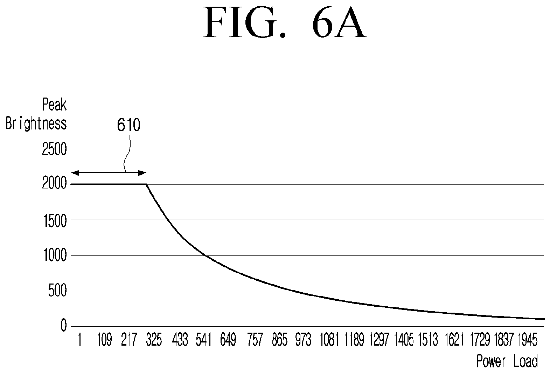

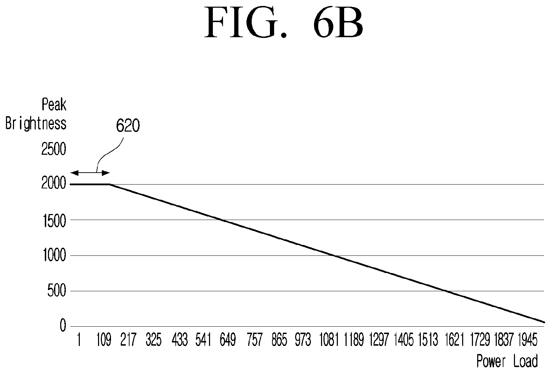

FIGS. 5A, 5B, 6A, and 6B are views provided to explain a method of acquiring first peak brightness information and second peak brightness information according to an embodiment.

According to an example, the first peak brightness information may be information obtained by measuring the peak brightness of the display device 100 regardless of the power situation, i.e., in a situation where there is no limitation on the power supply to the display device 100.

For example, as shown in FIG. 5A, the display 110 may have a predetermined static brightness 510, and the peak brightness may be measured by providing a white image to a certain size area 521 of the display 110 and black image 520 to the remaining areas. In addition, the size providing the white may be gradually increased to measure the brightness value according to the increasing power load. In this case, it is possible to obtain the first peak brightness information as shown in FIG. 6A. In other words, the display 110 may have peak brightness as shown in FIG. 6A at a site of a normal power situation.

According to an embodiment, the second peak brightness information may be information obtained by calculating the peak brightness of the display device 100 based on the first peak brightness information in a situation where the power supply is limited. For example, in order to maintain the peak brightness as shown in FIG. 6A in a situation with limited power supply, the peak brightness may be calculated by providing a white image to an area 541 smaller than the certain size area 521 (FIG. 5A) as shown in FIG. 5B, and a black image 540 to the remaining areas. In addition, the size providing the white may be gradually increased to measure the brightness value according to the increasing power load. In this case, it is possible to obtain the second peak brightness information as shown in FIG. 6B. However, the static brightness 530 may be the same as the static brightness 510 in FIG. 5A, but is not necessarily limited thereto.

According to an embodiment, as shown in FIG. 6A, the first peak brightness information may be a graph in which predetermined peak brightness (e.g., 2000) is provided during a first power load section 610 and the peak brightness value decreases as the slope gradually decreases as the power load increases.

According to an embodiment, as shown in FIG. 6B, the second peak brightness information may be a graph in which a predetermined peak brightness (e.g., 2000) is provided during a second power load section 620 that is shorter than the first power load section 610, and the peak brightness value decreases as the slope is maintained as the power load increases. In other words, the length of the power load section 620 during which the peak brightness predetermined in the second peak brightness information shown in FIG. 6B is provided may be shorter than the length of the power load section 610 during which the peak brightness predetermined in the first peak brightness information shown in FIG. 6A is provided.

Referring back to step S430 of FIG. 4, the processor 140 may control the plurality of driving modules such that the first display module has a peak brightness value that is relatively high among the first peak brightness value identified based on the first peak brightness information and the second peak brightness value identified based on the first peak brightness information. For example, the processor 140 may control the plurality of driving modules such that the first display module has the first peak brightness value since the first peak brightness value of the first peak brightness information shown in FIG. 6A is relatively higher than the second peak brightness value of the second peak brightness information shown in FIG. 6B when the power load of the video frame is identified as 220.

According to an embodiment, the processor 140 may obtain third peak brightness information by identifying a relatively higher peak brightness value among the first peak brightness information and the second peak brightness information according to the power load, and store the obtained third peak brightness information in the memory 130. In this case, the third peak brightness information is a graph obtained based on the relatively higher peak brightness value among the first peak brightness value and the second peak brightness value according to each power load and thus, when identifying the peak brightness corresponding to the power load of the video frame based on the third peak brightness information, the relatively higher peak brightness value among the first peak brightness value and the second peak brightness value may be identified.

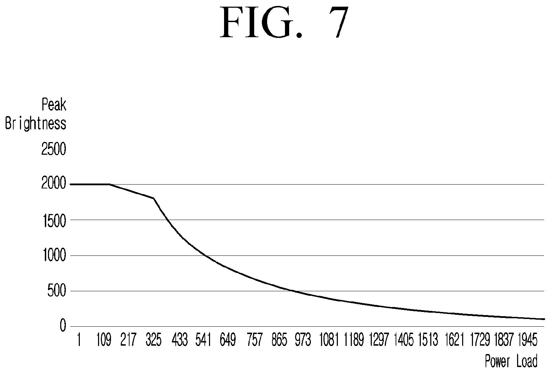

FIG. 7 is a view illustrating third peak brightness information according to an embodiment.

The third peak brightness information shown in FIG. 7 is a graph obtained based on the first peak brightness information shown in FIG. 6A and the second peak brightness information shown in FIG. 6B. For example, for each power load, the third peak brightness information as shown in FIG. 7 may be obtained based on a relatively high value among the first peak brightness information and the second peak brightness information.

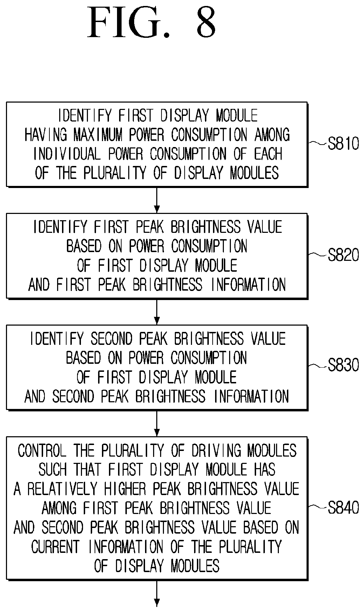

FIG. 8 is a view provided to explain a display driving method according to an embodiment.

According to the embodiment illustrated in FIG. 8, the processor 140 may identify a first display module having maximum power consumption among the individual power consumption of each of the plurality of display modules (S810). According to an embodiment, the processor 140 may identify the individual power consumption of each of the plurality of display modules based on a grayscale value of the image displayed in the area of the plurality of display modules and power information of each sub-pixel for each grayscale of the image as shown in FIG. 3B, and identify the first display module having the maximum power consumption based on the individual power consumption of each of the plurality of display modules.

Subsequently, the processor 140 may identify a first peak brightness value based on the power consumption of the first display module and the first peak brightness information (S820).

Further, the processor 140 may identify a second peak brightness value based on the power consumption of the first display module and the second peak brightness information (S830).

Next, the processor 140 may control the plurality of driving modules such that the first display module has a peak brightness value that is relatively higher among the first peak brightness value and the second peak brightness value based on the current information of the plurality of display modules (S840).

However, in the case of using the third peak brightness information shown in FIG. 7, it is of course possible to identify a peak brightness value based on the power consumption of the first display module and the third peak brightness information, and to control the plurality of driving modules such that the first display module has the identified peak brightness value.

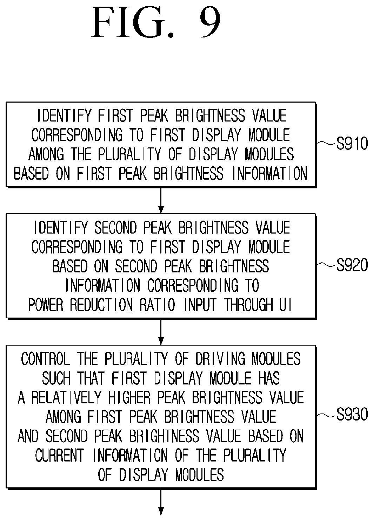

FIGS. 9, 10A, 10B, 11A, and 11B are views provided to explain a display driving method according to an embodiment.

According to an embodiment, when a power reduction ratio is further set by a user input in a power limited situation, the second peak brightness information may be recalculated based on that power reduction ratio. In this case, the second peak brightness information calculated based on the power reduction ratio input by the user at step S420 shown in FIG. 4 may be used. For example, the second peak brightness information may be a graph in which the length of the power load section where the predetermined peak brightness is maintained varies according to the power reduction ratio input through the UI. For example, a graph with a power reduction ratio of 90% (i.e., a 10% power reduction) may have a longer power load section length where the predetermined peak brightness is maintained compared to a graph with a power reduction ratio of 80% (i.e., a 20% power reduction).

According to the embodiment illustrated in FIG. 9, the processor 140 may identify a first peak brightness value corresponding to a first display module among the plurality of display modules based on the first peak brightness information (S910). Here, the first peak brightness information may be peak brightness information corresponding to a first power supply situation.

Subsequently, the processor 140 may identify a second peak brightness value corresponding to the first display module based on the second peak brightness information corresponding to the power reduction ratio input via the UI (S920). Here, the second peak brightness information may be peak brightness information corresponding to a second power supply situation that is relatively more limited than the first power situation.

Next, the processor 140 may control the plurality of driving modules such that the first display module has a peak brightness value that is relatively higher among the first peak brightness value identified in step S910 and the second peak brightness value identified in step S920 based on the current information of the plurality of display modules stored in the memory 130 (S930).

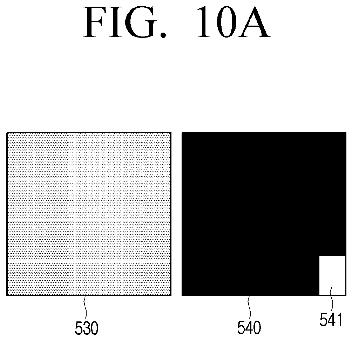

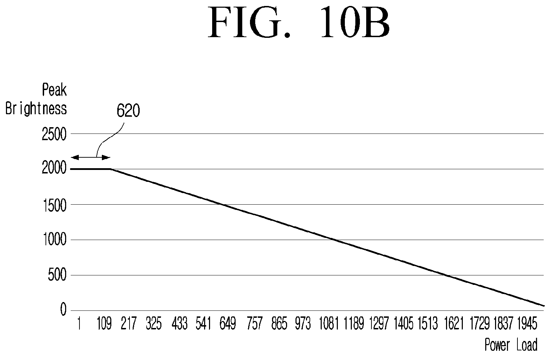

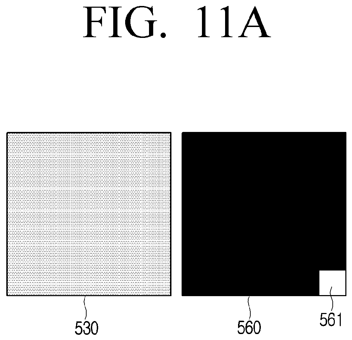

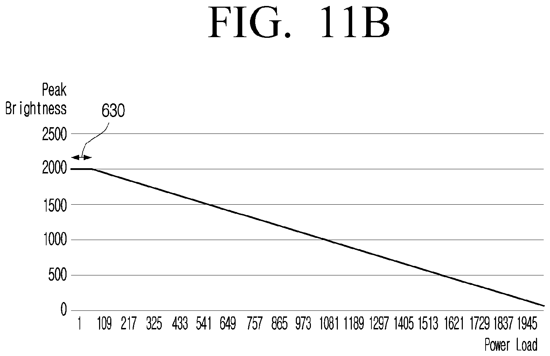

According to an embodiment, FIGS. 10A and 10B may represent the second peak brightness information in a power limited situation as described in FIGS. 5B and 6B. In this case, the power reduction ratio is not separately input from the user through the UI, so it may be assumed that the power reduction ratio is 100%. However, when the power reduction ratio is additionally input through the UI in a power limited situation, for example, when the power reduction ratio is input as 80%, the second peak brightness information may be recalculated. For example, in order to maintain the peak brightness as shown in FIG. 10B while applying the power reduction ratio as shown in FIG. 11A, the peak brightness may be calculated by providing a white image to an area 561 that is smaller than an area 541 where the white image is provided in FIG. 10A and a black image 560 to the remaining areas as shown in FIG. 11A. In this case, the second peak brightness information as shown in FIG. 6B may be obtained. The second peak brightness information calculated accordingly may be a graph in which predetermined peak brightness (e.g., 2000) is provided during a third power load section 630 that is shorter than the second power load section 620 of FIG. 10B, and the peak brightness value decreases as the power load increases as the slope is maintained as shown in FIG. 11B. In other words, the length of the power load section during which the predetermined peak brightness is provided may vary depending on the power reduction ratio.

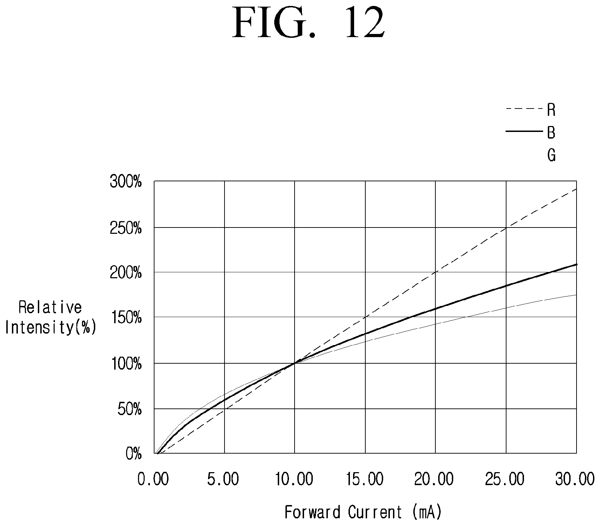

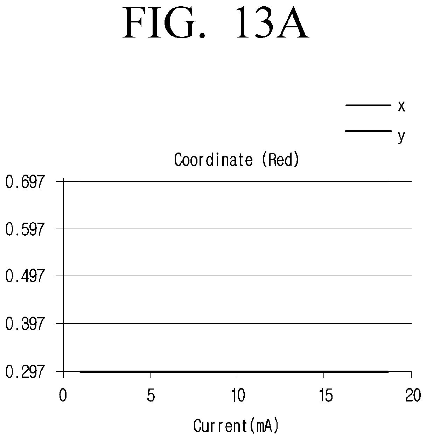

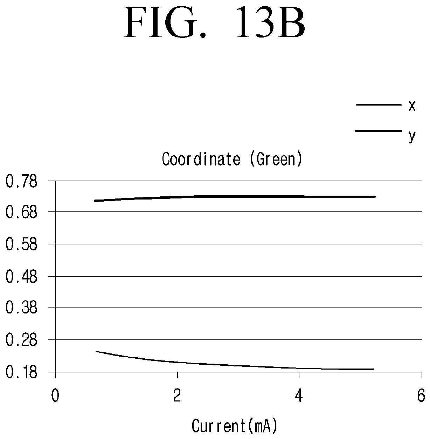

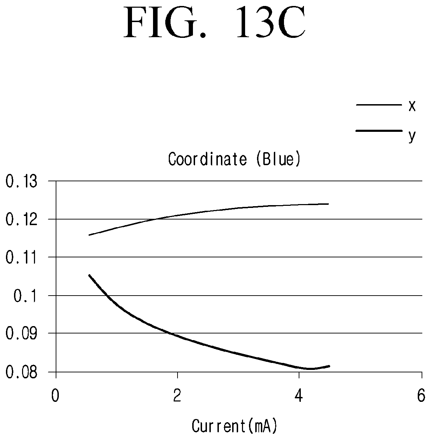

Meanwhile, according to various embodiments described above, when the peak brightness levels of the plurality of display modules 110-1, 110-2, 110-3, 110-4.... are identified, the processor 140 may obtain the current gain value for each sub-pixel from the memory 130 such that each of the display modules 110-1, 110-2, 110-3, 110-4.... has a corresponding peak brightness level. The processor 140 may control the plurality of driving modules to provide a current value corresponding to each of the pixels included in the plurality of display modules 110-1, 110-2, 110-3, 110-4... based on the obtained current gain value. For example, the R/G/B LED elements have different brightness increase characteristics according to the increase in current as shown in FIG. 12. In addition, as shown in FIGS. 13A and 13B, the R/G/B LED elements have different color shift characteristics as the color coordinates change in different forms according to the increase in current. For example, as illustrated in FIG. 13A, the x and y coordinates of the red pixel maintain the same value as the current increases, but as illustrated in FIG. 13B, the x and y coordinates of the green pixel change slightly, and as illustrated in FIGS. 13B and 13C, it can be confirmed that the x and y coordinates of the blue pixel change significantly as the current increases. The memory 130 may store a current gain value for each brightness of the R/G/B LED elements, which are calculated by reflecting the brightness characteristics according to the current of the R/G/B LED elements as illustrated in FIG. 12 and the color characteristics according to the current of the R/G/B LED elements as illustrated in FIGS. 13A to 13C. For example, when a peak brightness level corresponding to each display module 110-1, 110-2, 110-3, 110-4, ... is identified, a gain value of the current flowing to each R/G/B LED element may be applied based on the graph of FIG. 3A for a specific current value required to implement the identified each brightness level. In other words, a final current value where a current gain value according to the characteristics of the R/G/B LED elements is applied to each current value for implementing the peak brightness level of each display module 110-1, 110-2, 110-3, 110-4, ... may be applied to a driving module corresponding to each display module 110-1, 110-2, 110-3, 110-4, .... However, when one driving module controls the driving of a plurality of display areas, the current gain values corresponding to the display modules 110-1, 110-2, 110-3, 110-4... may be provided to one driving module.

For example, the brightness of the plurality of display modules 110-1, 110-2, 110-3, 110-4... may be controlled to the peak brightness level by applying each of the gain values gᵣ₁, g_{g1}, and g_{b1} for driving each of the R/G/B LED elements of the first display module 110-1 to the corresponding current value a, applying each of the gain values gᵣ₂, g_{g2}, and g_{b2} for driving each of the R/G/B LED elements of the second display module 110-2 to the corresponding current value b, and in the same manner, applying each of the gain values gᵣₙ, g_{gn}, and g_{bn} for driving the R/G/B LED elements of the n-th display module 110-n to the corresponding current value c.

According to various embodiments as described above, it is possible to maintain peak brightness even in a power limited situation. For example, even in the case where a product is installed at a site with limited power, the product may be able to maintain its own peak brightness.

The methods according to the various embodiments of the present disclosure described above may be implemented only with a software upgrade or a hardware upgrade for an existing display device.

In addition, the various embodiments of the present disclosure described above may also be performed through an embedded server provided in the display device, or an external server of the display device.

Meanwhile, according to an embodiment, the above-described various embodiments may be implemented as software including instructions stored in machine-readable storage media, which can be read by machine (e.g.: computer). The machine refers to a device that calls instructions stored in a storage medium, and can operate according to the called instructions, and the device may include a display device (e.g., display device A) according to the aforementioned embodiments. In case an instruction is executed by a processor, the processor may perform a function corresponding to the instruction by itself, or by using other components under its control. The instruction may include a code that is generated or executed by a compiler or an interpreter. The machine-readable storage medium may be provided in the form of a non-transitory storage medium. Here, the term 'non-transitory' means that the storage medium is tangible without including a signal, and does not distinguish whether data are semi-permanently or temporarily stored in the storage medium.

In addition, according to an embodiment, the above-described methods according to the various embodiments may be included and provided in a computer program product. The computer program product may be traded as a product between a seller and a purchaser. The computer program product may be distributed in a form of a storage medium (e.g., a compact disc read only memory (CD-ROM)) that may be read by the machine or online through an application store (e.g., PlayStore^{™}). In case of the online distribution, at least a portion of the computer program product may be at least temporarily stored in a storage medium such as a memory of a server of a manufacturer, a server of an application store, or a relay server or be temporarily generated.

The components (e.g., modules or programs) according to various embodiments described above may include a single entity or a plurality of entities, and some of the corresponding sub-components described above may be omitted or other sub-components may be further included in the various embodiments. Alternatively or additionally, some components (e.g., modules or programs) may be integrated into one entity and perform the same or similar functions performed by each corresponding component prior to integration. Operations performed by the modules, the programs, or the other components according to the various embodiments may be executed in a sequential manner, a parallel manner, an iterative manner, or a heuristic manner, or at least some of the operations may be performed in a different order or be omitted, or other operations may be added.

Although preferred embodiments of the present disclosure have been shown and described above, the disclosure is not limited to the specific embodiments described above, and various modifications may be made by one of ordinary skill in the art without departing from the gist of the disclosure as claimed in the claims, and such modifications are not to be understood in isolation from the technical ideas or prospect of the disclosure.

## Claims

1. A display device comprising:
a display including a plurality of display modules;
a driving unit including a plurality of driving modules connected to the plurality of display modules;
memory storing first peak brightness information corresponding to a first power supply situation, second peak brightness information corresponding to a second power supply situation relatively limited in comparison to the first power supply situation, and current information corresponding to each of the plurality of display modules; and
one or more processors connected to the display, the driving unit and the memory to control the display device,
wherein the one or more processors are configured to:
identify a first peak brightness value corresponding to a first display module among the plurality of display modules based on the first peak brightness information;
identify a second peak brightness value corresponding to the first display module based on the second peak brightness information; and
control the plurality of driving modules such that the first display module has a relatively higher peak brightness value among the first peak brightness value and the second peak brightness value based on current information of the plurality of display modules stored in the memory.

2. The device as claimed in claim 1, wherein the first peak brightness information is information in which measures a peak brightness value according to power load while increasing a size providing the white image, with the predetermined peak brightness value when a white image is provided to a specific size area of the display and a black image is provided to remaining areas; and
wherein the second peak brightness information is information in which a white image is provided to an area that is smaller than the specific size area and a black image is provided to remaining areas to calculate the predetermined peak brightness value and a peak brightness value according to power load is calculated while increasing a size providing the white image.

3. The device as claimed in claim 1, wherein the first peak brightness information is a graph in which a peak brightness value decreases as the predetermined peak brightness is provided during a first power load section and a slope gradually decreases as the power load increases; and
wherein the second peak brightness information is a graph in which a peak brightness value decreases as the predetermined peak brightness is provided during a second power load section that is shorter than the first power load section and a slope is maintained as the power load increases.

4. The device as claimed in claim 1, wherein the one or more processors are configured to:
identify the first peak brightness value based on power consumption of the first display module having maximum power consumption among individual power consumption of each of the plurality of display modules and the first peak brightness information; and
identify the second peak brightness value based on the power consumption of the first display module and the second peak brightness information.

5. The device as claimed in claim 4, wherein the memory further stores power information of each sub-pixel for each grayscale of an image; and
wherein the one or more processors are configured to:
identify individual power consumption of each of the plurality of display modules based on a grayscale value of an image displayed on an area of the plurality of display modules and the power information of each sub-pixel for each grayscale; and
identify the first display module having the maximum power consumption based on the individual power consumption of each of the plurality of display modules.

6. The device as claimed in claim 1, where the one or more processors are configured to:
provide a UI for receiving an input of a power reduction ratio through the display; and
identify the second peak brightness value corresponding to the first display module based on second peak brightness information corresponding to the power reduction ratio input through the UI.

7. The device as claimed in claim 6, wherein the first peak brightness information is a graph in which a peak brightness value decreases as a slope gradually decreases as the power load increases and the predetermined peak brightness is maintained during a first power load section;
wherein the second peak brightness information is a graph in which a peak brightness value decreases as a slope is maintained as the power load increases and the predetermined peak brightness is maintained during a second power load section that is smaller than the first power load section;
wherein the second peak brightness information is a graph in which when a power reduction ratio input through the UI is a first ratio, the predetermined peak brightness is maintained during the second power load section, and a graph in which when a power reduction ratio input through the UI is a second ratio that is greater than the first ratio, the predetermined peak brightness is maintained during a third power load section that is smaller than the second power load section.

8. The device as claimed in claim 1, wherein the one or more processors are configured to:
obtain third peak brightness information by identifying a relatively higher peak brightness value among the first peak brightness information and the second peak brightness information according to power load; and
control the plurality of driving modules such that the first display module has a relatively higher peak brightness value among the first peak brightness value and the second peak brightness value according to the third peak brightness information.

9. The device as claimed in claim 1, wherein the current information includes current control information according to brightness of each sub-pixel corresponding to each of the plurality of display modules; and
wherein the sub-pixel includes red (R) LED, green (G) LED and blue (B) LED sub-pixels.

10. A driving method of a display device including a plurality of display modules, the method comprising:
identifying a first peak brightness value corresponding to a first display module among the plurality of display modules based on first peak brightness information corresponding to a first power supply situation;
identifying a second peak brightness value corresponding to the first display module based on second peak brightness information corresponding to a second power supply situation that is relatively limited in comparison to the first power supply situation; and
controlling a plurality of driving modules connected to the plurality of display modules such that the first display module has a relatively higher peak brightness value among the first peak brightness value and the second peak brightness value based on current information of the plurality of display modules.

11. The method as claimed in claim 10, wherein the first peak brightness information is information in which measures a peak brightness value according to power load while increasing a size providing the white image, with the predetermined peak brightness value when a white image is provided to a specific size area of the display and a black image is provided to remaining areas; and
wherein the second peak brightness information is information in which a white image is provided to an area that is smaller than the specific size area and a black image is provided to remaining areas to calculate the predetermined peak brightness value and a peak brightness value according to power load is calculated while increasing a size providing the white image.

12. The method as claimed in claim 10, wherein the first peak brightness information is a graph in which a peak brightness value decreases as the predetermined peak brightness is provided during a first power load section and a slope gradually decreases as the power load increases; and
wherein the second peak brightness information is a graph in which a peak brightness value decreases as the predetermined peak brightness is provided during a second power load section that is shorter than the first power load section and a slope is maintained as the power load increases.

13. The method as claimed in claim 10, wherein the identifying a first peak brightness value comprises identifying the first peak brightness value based on power consumption of the first display module having maximum power consumption among individual power consumption of each of the plurality of display modules and the first peak brightness information; and
wherein the identifying a second peak brightness value comprises identifying the second peak brightness value based on the power consumption of the first display module and the second peak brightness information.

14. The method as claimed in claim 13, further comprising:
identifying individual power consumption of each of the plurality of display modules based on a grayscale value of an image displayed on an area of the plurality of display modules and power information of each sub-pixel for each grayscale; and
identifying the first display module having the maximum power consumption based on the individual power consumption of each of the plurality of display modules.

15. A non-transitory computer-readable recording medium storing a computer instruction that, when executed by a processor of a display device including a plurality of display modules, causes the display device to:
identify a first peak brightness value corresponding to a first display module among the plurality of display modules based on first peak brightness information corresponding to a first power supply situation;
identify a second peak brightness value corresponding to the first display module based on second peak brightness information corresponding to a second power supply situation that is relatively limited in comparison to the first power supply situation; and
control a plurality of driving modules connected to the plurality of display modules such that the first display module has a relatively higher peak brightness value among the first peak brightness value and the second peak brightness value based on current information of the plurality of display modules.
